# EUROPÄISCHE PATENTANMELDUNG

(11) **EP 4 645 167 A1**
(43) Veröffentlichungstag der Anmeldung: **05.11.2025**
(21) Anmeldenummer: 25167251.5
(22) Anmeldetag: 31.03.2025
(51) Int. Cl.: G06N 3/045

(54) **COMPUTER-IMPLEMENTIERTES VERFAHREN ZUM ÜBERPRÜFEN VON DATENELEMENTEN HINSICHTLICH EINER PLAUSIBILITÄT**

(30) Priorität: 29.04.2024 DE 102024203980
(71) Anmelder: Siemens Mobility GmbH, 80997 München (DE)
(72) Erfinder: Rothbauer, Stefan, 86156 Augsburg (DE); Udluft, Steffen, 82223 Eichenau (DE); Zeller, Marc, 81243 München (DE)
(74) Vertreter: Siemens Patent Attorneys

(57) **Zusammenfassung**

Die Erfindung betrifft ein computer-implementiertes Verfahren zum Überprüfen von Datenelementen hinsichtlich einer Plausibilität, aufweisend die Schritte a. Bereitstellen eines ersten Eingabedatensatzes umfassend eine Mehrzahl von Datenelementen (S1); b. Bereitstellen eines zweiten Eingabedatensatzes umfassend eine Mehrzahl von Datenelementen (S2); wobei sich die Eingabedatensätze voneinander unterscheiden oder übereinstimmen;
c. Ermitteln von einem zugehörigen Betriebszustand für jedes Datenelement der Mehrzahl der Datenelemente mittels eines ersten Ansatzes basierend auf Maschinellem Lernen auf Basis des ersten Eingabedatensatzes oder des zweiten Eingabedatensatzes (S3); wobei sich der Betriebszustand auf ein technisches System bezieht; d. Ermitteln von einem zugehörigen Betriebszustand für jedes Datenelement der Mehrzahl der Datenelemente mittels mindestens eines zweiten Ansatzes basierend auf Maschinellem Lernen auf Basis des ersten Eingabedatensatzes oder des zweiten Eingabedatensatzes (S4); e. Zuweisen von einem Plausibilitäts-Kennzeichen zu jedem Datenelement, welches mittels des ersten Ansatzes klassifiziert wird und/oder Zuweisen von einem Plausibilitäts-Kennzeichen zu jedem Datenelement, welches mittels des zweiten Ansatzes klassifiziert wird (S5); und f. Bereitstellen der mittels des ersten Ansatzes ersten klassifizierten Datenelemente mit den jeweiligen zugehörigen Plausibilitäts-Kennzeichen und Bereitstellen der mittels des zweiten Ansatzes zweiten klassifizierten Datenelemente mit den jeweiligen zugehörigen Plausibilitäts-Kennzeichen (S6).

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Überprüfen von Datenelementen hinsichtlich einer Plausibilität. Ferner ist die Erfindung auf ein entsprechendes technisches System und ein Computerprogrammprodukt gerichtet.

### 2. Stand der Technik

Das autonome Fahren gewinnt zunehmend an Bedeutung. Diverse autonome Fahrzeuge, wie Autos und Züge, sind in diesem Zusammenhang aus dem Stand der Technik bekannt. Der Automatisierungsgrad nimmt ebenfalls erblich zu.

Die autonomen Fahrzeuge sind dazu eingerichtet zumindest weitgehend fahrerlos betrieben zu werden. Sie sind folglich selbst-fahrend. Im Zuge der Weiterentwicklung der autonomen Züge und deren Steuerungssysteme wird die Steuerung des Zugs Schritt für Schritt vom Triebfahrzeugführer (auch Zugführer genannt) auf ein technisches System mit automatisierter Steuerung (auch Zugsteuerung genannt) übertragen.

Hindernisse im Gleisbett von Zügen stellen bis heute schwerwiegende Risiken im Zugverkehr dar. Die Triebfahrzeugführer müssen mitunter sehr schnell reagieren, um einen größeren Schaden von Zug und Passagieren abzuwenden. Hindernisse können Teile von durch Unwetter beschädigter Streckeneinrichtung wie Oberleitungen oder Masten sein, aber auch umgefallene Bäume oder Personen.

Eine zuverlässige automatisierte Hinderniserkennung und die Einleitung entsprechender Gegenmaßnahmen, wie eine Schnellbremsung im Gleisbett, stellen bis heute eine große Herausforderung dar. Die technischen Systeme basieren hierzu zunehmend auf maschinellem Lernen, um die Hinderniserkennung zu verbessern.

Im Stand der Technik gibt es jedoch keine Garantie dafür, dass das Ergebnis einer bestimmten Eingabe durch das Machine-Learning-Modell auch korrekt klassifiziert wird. Für die technischen Systeme oder deren Anwendungen, bei denen die auf der Klassifizierung basierenden Entscheidungen kritisch sind, ist ein zuverlässiger Indikator für die Sicherheit erforderlich, dass das Ergebnis korrekt ist. Zum Beispiel ist die zuverlässige und sichere Klassifizierung für die automatisierte Steuerung (auch Zugsteuerung genannt) von entscheidender Bedeutung bei den autonomen Zügen oder die sichere Personenerkennung in industriellen Anlagen. Im schlimmsten Fall kommt es andernfalls zu Gefahrensituationen und verletzten Personen auf dem Gleisbett durch die fehlerhafte Klassifizierung und folglich auch Steuerung durch den autonomen Zug oder die industrielle Anlage.

Die vorliegende Erfindung stellt sich daher die Aufgabe ein computer-implementiertes Verfahren zum Überprüfen von Datenelementen hinsichtlich einer Plausibilität bereitzustellen, welches effizienter und zuverlässiger ist.

### 3. Zusammenfassung der Erfindung

Die oben genannte Aufgabe wird erfindungsgemäß durch ein computer-implementiertes Verfahren zum Überprüfen von Datenelementen hinsichtlich einer Plausibilität gelöst, aufweisend die Schritte
a. Bereitstellen eines ersten Eingabedatensatzes umfassend eine Mehrzahl von Datenelementen;
b. Bereitstellen eines zweiten Eingabedatensatzes umfassend eine Mehrzahl von Datenelementen; wobei
   sich die Eingabedatensätze voneinander unterscheiden oder übereinstimmen;
c. Ermitteln von einem zugehörigen Betriebszustand für jedes Datenelement der Mehrzahl der Datenelemente mittels eines ersten Ansatzes basierend auf Maschinellem Lernen auf Basis des ersten Eingabedatensatzes oder des zweiten Eingabedatensatzes; wobei
   sich der Betriebszustand auf ein technisches System bezieht;
d. Ermitteln von einem zugehörigen Betriebszustand für jedes Datenelement der Mehrzahl der Datenelemente mittels mindestens eines zweiten Ansatzes basierend auf Maschinellem Lernen auf Basis des ersten Eingabedatensatzes oder des zweiten Eingabedatensatzes;
e. Zuweisen von einem Plausibilitäts-Kennzeichen zu jedem Datenelement, welches mittels des ersten Ansatzes klassifiziert wird und Zuweisen von einem Plausibilitäts-Kennzeichen zu jedem Datenelement, welches mittels des zweiten Ansatzes klassifiziert wird; und
f. Bereitstellen der mittels des ersten Ansatzes ersten klassifizierten Datenelemente mit den jeweiligen zugehörigen Plausibilitäts-Kennzeichen und Bereitstellen der mittels des zweiten Ansatzes zweiten klassifizierten Datenelemente mit den jeweiligen zugehörigen Plausibilitäts-Kennzeichen.

Dementsprechend ist die Erfindung auf ein computer-implementiertes Verfahren zum Überprüfen von Datenelementen hinsichtlich einer Plausibilität gerichtet.

In den ersten Verfahrensschritten werden die Eingabedatensätze mit den jeweiligen Datenelementen bereitgestellt. Dabei gibt es unterschiedliche Arten von Datensätzen für das maschinelle Lernen. Die Daten können beispielsweise als Textdaten, Audiodaten, Videodaten und/oder Bilddaten vorliegen. Die Eingabedatensätze für die ersten und zweiten Ansätze können sich unterscheiden oder nicht unterscheiden. Folglich können die beiden Ansätze die gleichen oder unterschiedliche Daten als Eingabe verwenden. Bevorzugt liegen unterschiedliche Datensätze derselben Art vor, beispielsweise zwei Bilddatensätze.

Die Eingabedatensätze können über eine oder mehrere Eingabeschnittstellen empfangen werden. Zusätzlich oder alternativ können die Ausgabedaten auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Weiterhin wird für jedes Datenelement der zugehörige Betriebszustand ermittelt. Der Betriebszustand steht in Relation zu dem technischen System. Folglich liegt für jedes Datenelement nach der Ermittlung auch der zugeordnete Betriebszustand vor.

Üblicherweise arbeiten die technischen Systeme innerhalb eines definierten Systemkontextes, des sogenannten Betriebs-Bereichs (im Englischen "Operational Domain", kurz OD). Beispielhafte ODs sind Gleisabschnitte und Industrieanlagen etc. Hierfür kann ein Betriebs-Bereichs-Design-Modell definiert werden. Das Betriebs-Bereichs-Design-Modell ist unter dem englischen Begriff "Operational Design Domain Model" bekannt, kurz ODD-Modell. Das ODD ist ein Darstellungsmodell der realen Welt und beschreibt den Betriebs-Bereich, in dem das technische System betrieben wird. Das ODD weist Eigenschaften oder Attribute auf, wie die Betriebszustände. Mit anderen Worten beschreiben konkrete Eigenschaften der ODD und der Zustand des technischen Systems einen Betriebszustand. Die Ermittlung des Betriebszustandes kann anhand der Merkmale der ODD erfolgen.

Dies bietet den Vorteil, dass Expertenwissen um die Fähigkeiten bzw. Unzulänglichkeiten des technischen Systems explizit eingeht, und auch in der Validierung des technischen Systems beurteilt werden kann, ob die Einschätzung der Plausibilitäts-Kennzeichen sinnvoll ist. Beispielsweise kann ermittelt werden, ob das Neuronale Netz die richtigen Sachen gelernt hat.

Das technische System umfasst üblicherweise eine Mehrzahl von technischen Komponenten, wie Hardwarekomponenten und/oder Softwarekomponenten. Beispielhafte technische Systeme sind autonome Transportmittel, wie autonomer Zug und autonomes Fahrzeug, sowie industrielle Anlagen.

Das technische System kann beispielsweise eine Maschine oder Anlage oder mehrere physisch, virtuell und/oder funktional verbundene Maschinen und/oder Anlagen beinhalten. Beispiel-hafte Anwendungsgebiete sind Systeme im Bereich der Energietechnik, etwa Anlagen und/oder Maschinen zur Energieerzeugung, zur Energieumwandlung und/oder zum Energietransport. Weitere beispielhafte Anwendungsgebiete liegen im Bereich der Mobilität, etwa im Eisenbahnverkehr, so dass das technische System beispielsweise Zugkomponenten, Zugmaschinen, Gleisanlagen oder Teile davon, Personenkraftwagen und Lastkraftwagen etc. beinhalten kann, im Bereich der Industrieproduktion, so dass das System beispiels-weise Produktionsmaschinen oder -anlagen, Fertigungsmaschinen oder -anlagen, Testvorrichtungen, Überwachungsanlagen, Fördermaschinen oder -anlagen, verfahrenstechnische Anlagen etc. beinhalten kann. Weitere beispielhafte Anwendungsgebiete liegen im Bereich der Medizintechnik, so dass das technische System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme etc. beinhalten kann. Das technische System kann auch eines oder mehrere Robotersysteme beinhalten.

Die Ermittlung erfolgt unter Verwendung von den ersten und zweiten Ansätzen. Die Ansätze basieren jeweils auf Maschinellem Lernen. Mit anderen Worten kann ein Ansatz basierend auf Maschinellem Lernen als ein Machine-Learning-Modell vorliegen, welches auf den Eingabedatensatz angewendet wird. Die Ansätze können sich voneinander unterscheiden oder übereinstimmen. Beispielsweise können zwei unterschiedliche Ansätze, wie hierarchisches Clustering und ein Neuronales Netz Anwendung finden. Der Begriff "Ermitteln" wird hier in diesem Zusammenhang als "Bestimmen" und/oder "Bereitstellen" verstanden. Dementsprechend können der erste und/oder der zweite Eingabedatensatz bereits klassifiziert sein und bereitgestellt werden. Alternativ kann der erste und/oder der zweite Eingabedatensatz auch erst klassifiziert, folglich bestimmt und bereitgestellt werden. Somit werden die Objekte, hier die Datenelemente, den passenden vorgegebenen Labeln oder Kennzeichen, hier die Betriebszustände, zuordnet.

Folglich werden die Eingabedaten mittels des ersten Ansatzes klassifiziert sowie mittels des mindestens einen zweiten Ansatzes klassifiziert.

Darüber hinaus erfolgt eine weitere Zuordnung. Die Datenelemente werden den Plausibilitäts-Kennzeichen zugeordnet. Dementsprechend weisen die Datenelemente nach den Zuordnungen die Betriebszustände sowie die Plausibilitäts-Kennzeichen auf. Bevorzugt erfolgt die zweite Zuordnung der Plausibilitäts-Kennzeichen auch für beide Ansätze und der daraus resultierenden klassifizierten Datenelemente separat. Die Plausibilitäts-Kennzeichen gemäß des ersten Ansatzes können entsprechend mit den Plausibilitäts-Kennzeichen gemäß des zweiten Ansatzes miteinander verglichen werden. Im Fall einer Übereinstimmung oder zumindest teilweiser Übereistimmung spricht dies für die Zuverlässigkeit des Plausibilitäts-Kennzeichens und die Plausibilität, folglich auch für die Zuverlässigkeit der Klassifizierung. Das Plausibilitäts-Kennzeichen kann als "Confidence score" bzw. Konfidenzwert vorliegen. Das Plausibilitäts-Kennzeichen kann folglich auch als Unsicherheits-Kennzeichen oder Konfidenz-Kennzeichen ausgelegt werden.

Die Verfahrensschritte des computerimplementierten Verfahrens können von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Die vorliegende Erfindung stellt dadurch sicher, dass die Datenelementen auf effiziente Art und Weise mit Plausibilitäts-Kennzeichen versehen werden und hinsichtlich ihrer Plausibilität zuverlässig beurteilt werden.

Durch mehrere unabhängige Ansätze kann ein Vergleich ermöglicht werden. Der Vergleich unabhängig ermittelter Plausibilitäts-Kennzeichen vermittelt eine höhere Sicherheit, ob dem eigentlichen Ergebnis getraut werden kann.

Mit anderen Worten wird zuverlässig ermittelt, ob die Klassifizierung korrekt ist (bzw. mit welcher Sicherheit).

Dabei kann anwendungsspezifisch festgelegt werden, wie mit den Plausibilitäts-Kennzeichen weiter fortgefahren wird: Beispielsweise können die Plausibilitäts-Kennzeichen in beiden Fällen hoch sein, dann kann der Klassifikation vertraut werden.

Falls ein Konfidenzwert hoch ist, aber ein Konfidenzwert niedrig ist, ist es jedoch unsicher, ob die Klassifikation zutrifft.

In einer Ausgestaltung ist das Maschinelle Lernen überwachtes oder semi-überwachtes Lernen. Dabei wird semi-überwachtes Lernen bevorzugt verwendet, wenn wenige oder zu wenige gelabelete Daten vorliegen.

In einer weiteren Ausgestaltung ist der erste Ansatz basierend auf Maschinellem Lernen und/oder der zweite Ansatz basierend auf Maschinellem Lernen ein Ansatz, ausgewählt aus der Gruppe bestehend aus:
hierarchischen Clustering und relationales Lernen.

In einer weiteren Ausgestaltung unterscheidet sich der erste Ansatz vom zweiten Ansatz. Dementsprechend weichen die Ansätze voneinander ab und stimmen nicht überein. Der Vorteil liegt darin, dass die Ansätze die Konfidenz in das Ergebnis auf diversitäre Art und Weise ermitteln, und dadurch einen Vergleich ermöglichen, mit welcher Sicherheit das eigentliche Ergebnis (die Klassifikation) korrekt ist. Sowohl unterschiedliche Daten als auch unterschiedliche Ansätze haben sich als besonders vorteilhaft erwiesen.

In einer weiteren Ausgestaltung weist das computer-implementierte Verfahren weiterhin auf
- Ausgeben der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen auf einer Anzeigeeinheit,
- Speichern der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen in einer Speichereinheit, und
- Übermitteln der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen an eine Recheneinheit.

Dementsprechend können eine oder mehrere Verfahrensschritte nach der Bereitstellung der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen als Ausgabe des erfindungsgemäßen Verfahrens eingeleitet werden. Die Verfahrensschritte können gleichzeitig, nacheinander oder auch stufenweise durchgeführt werden.

Jegliche Eingabedaten oder Ausgabedaten können an beliebige Recheneinheiten, wie eine Anzeige-, eine Verarbeitungs-, oder eine Speichereinheit übertragen werden. Die Ausgabedaten können als Ausgabe bereitgestellt werden, beispielsweise einem Nutzer wie Experten auf einer Anzeigeeinheit zur weiteren Überprüfung oder Beurteilung angezeigt werden. Ferner können die Ausgabedaten selbst oder in Form einer entsprechenden Nachricht oder Mitteilung an eine Recheneinheit übertragen werden. Nach dem Empfang der Ausgabedaten durch den Nutzer oder die Recheneinheit und erfolgter weiterer Überprüfung kann beispielsweise eine Freigabe oder Bestätigung der Daten und/oder der Ansätze erfolgen.

Der Vorteil liegt darin, dass die erforderlichen oder die gewünschten Verfahrensschritte flexibel ausgewählt und auf effiziente Art und Weise durchgeführt werden.

In einer weiteren Ausgestaltung weist das computer-implementierte Verfahren weiterhin auf
- Beurteilen des Systemverhaltens des technischen Systems, des ersten Ansatzes und/oder des zweiten Ansatzes unter Berücksichtigung der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein schematisches Ablaufdiagramm des erfindungsgemäßen Verfahrens.
- FIG 2: zeigt eine schematische Darstellung des zweiten Ansatzes gemäß einer Ausführungsform der Erfindung.
- FIG 3: zeigt eine schematische Darstellung der Anwendung des zweiten Ansatzes für die Bestimmung der Plausibilitäts-Kennzeichen gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

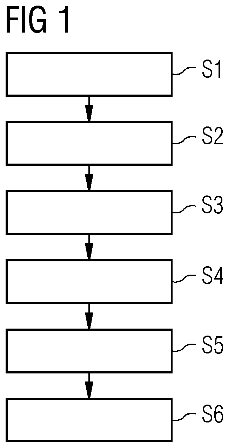

Figur 1 stellt ein Ablaufdiagramm des erfindungsgemäßen Verfahrens mit den Verfahrensschritten S1 bis S6 schematisch dar. Im ersten Verfahrensschritt wird der erste Eingabedatensatz umfassend die Mehrzahl der Datenelemente bereitgestellt S1. Im zweiten Verfahrensschritt wird der zweite Eingabedatensatz umfassend die Mehrzahl der Datenelemente bereitgestellt S2. Die Eingabedatensätze unterscheiden sich voneinander oder stimmen überein. Im weiteren Verfahrensschritt wird der zugehörige Betriebszustand für jedes Datenelement der Mehrzahl der Datenelemente mittels des ersten Ansatzes basierend auf Maschinellem Lernen auf Basis des ersten Eingabedatensatzes oder des zweiten Eingabedatensatzes ermittelt S3. Dabei bezieht sich der Betriebszustand auf das technisches System. Im weiteren Verfahrensschritt wird der zugehörige Betriebszustand für jedes Datenelement der Mehrzahl der Datenelemente mittels des mindestens einen zweiten Ansatzes basierend auf Maschinellem Lernen auf Basis des ersten Eingabedatensatzes oder des zweiten Eingabedatensatzes ermittelt S4. Das Plausibilitäts-Kennzeichen wird zu jedem Datenelement, welches mittels des ersten Ansatzes klassifiziert wird zugewiesen und das Plausibilitäts-Kennzeichen wird zu jedem Datenelement zugewiesen, welches mittels des zweiten Ansatzes klassifiziert wird S5. Im Letzten Verfahrensschritt werden die mittels des ersten Ansatzes ersten klassifizierten Datenelemente mit den jeweiligen zugehörigen Plausibilitäts-Kennzeichen und die mittels des zweiten Ansatzes zweiten klassifizierten Datenelemente mit den jeweiligen zugehörigen Plausibilitäts-Kennzeichen bereitgestellt S6.

Mit anderen Worten werden mehrere Ansätze basierend auf Maschinellem Lernen verwendet, um die Betriebszustände zu ermitteln, bevorzugt welche in einer Betriebsdesigndomäne definiert sind. Die Betriebszustände werden den Plausibilitäts-Kennzeichen zugeordnet.

Die Ansätze liefern unabhängige Konfidenzschätzungen für die Klassifizierung der Eingabedatensätze. Bevorzugt unterscheiden sich die Ansätze voneinander gemäß einer Ausführungsform der Erfindung und bieten folglich vorteilhafterweise eine heterogene Konfidenzschätzung. Das Ergebnis des ersten Ansatzes kann durch den zweiten Ansatz hinsichtlich der Plausibilität verifiziert bzw. überprüft werden.

Mit anderen Worten können unabhängige Module oder Kanäle eingesetzt werden. Beispielsweise kann der erste Ansatz für die Objekterkennung verwendet werden (erster Kanal). Der zweite Ansatz kann verwendet werden, um die Unsicherheit der Objektdetektion des ersten Ansatzes zu bestimmen (zweiter Kanal).

Der erste Ansatz kann zusätzlich zur Detektion eine Schätzung der Unsicherheit der Objektdetektion bereitstellen. Alternativ kann der erste Ansatz auch keine Schätzung der Unsicherheit der Objektdetektion bereitstellen und diese somit weglassen.

Weiterhin kann eine Beschreibung der ODD vorliegen, die verschiedene Betriebszustände definiert. Die Betriebszustände werden durch Attribute charakterisiert. Beispielhafte Attribute sind Tageszeit (Dämmerung, Tag, Nacht), Umgebungsbedingungen (Nebel, Schnee, Regen, Sonnenschein), Streckenprofil (gekrümmt, gerade, wellig) und erwartete Elemente (Objekte, Personen) etc. Mit anderen Worten können auf Basis der ODD und der Zustandsinformationen des technischen Systems die Betriebszustände ermittelt werden.

Für das Trainieren werden bevorzugt gelabelte Eingabedaten in Form von Trainingsdaten verwendet. Die Kennzeichnung der Daten kann manuell oder automatisch erfolgen. Beispielsweise können die Trainingsdaten von einer oder mehreren Personen im Hinblick auf die Konfidenz oder den Schwierigkeitsgrad der Klassifikationsaufgabe für ein Bild bei Bilddaten gelabelt werden. Bevorzugt beschriften mehrere Personen unabhängig voneinander das Bild, um eine durchschnittliche Wahrscheinlichkeit zu berechnen.

Die Berechnung kann qualitativ sein, wie hoch, mittel, niedrig oder quantitativ, zum Beispiel mit einem Prozentwert zwischen 0 und 1.

Die gleichen Trainingsdaten können für den ersten sowie für den zweiten Ansatz verwendet werden. Alternativ können die Trainingsdaten auch für die Ansätze unterschiedlich sein. Bevorzugt ist zumindest ein Teil der Trainingsdaten mit den Betriebszuständen annotiert, besonders bevorzugt die in der ODD definiert sind.

Die Ansätze werden derart trainiert, dass der aktuelle Betriebszustand für eine neue Beobachtung geschätzt werden kann und jedem Betriebszustand eine Unsicherheit in Form des Plausibilitäts-Kennzeichens zugeordnet werden kann.

Das maschinelle Lernen ist relationales Lernen gemäß einer Ausführungsform der Erfindung, wie beispielsweise ein relationales Bayes'sches Netzwerk oder hierarchisches Clustering, bei dem zusätzlich zu den in der ODD definierten Betriebszuständen auch die Attribute verwendet werden, die die Unsicherheit für zum Beispiel Nacht + Schnee mit der Unsicherheit für "Nacht" und der Unsicherheit für "Schnee" in Beziehung setzen.

Die Unsicherheiten können den Betriebszuständen über die Fehler zugeordnet werden, welche der erste Ansatz bei Validierungsdaten macht, die nicht für das Training beim ersten Ansatz verwendet wurden. Diese Daten können mit Anmerkungen versehen werden.

Alternativ können nicht nur die in der ODD definierten Betriebszustände oder Attribute zur Schätzung der Unsicherheiten verwendet werden, sondern auch die Objektklasse, die der erste Ansatz ausgibt.

Falls der erste Ansatz eine Schätzung seiner eigenen Unsicherheit der Klassifikation liefert, kann sowohl die Unsicherheitsschätzung des ersten Ansatzes als auch die Unsicherheitsschätzung des zweiten Ansatzes verwendet werden, um das weitere Systemverhalten nach einer problemadaptierten Logik zu bestimmen. Folglich kann die Klassifizierung des ersten Ansatzes als zuverlässig betrachtet werden, wenn beide Unsicherheitsschätzungen eine kleine Unsicherheit schätzen, oder wenn beispielsweise beide Unsicherheitsschätzungen eine mittlere Unsicherheit schätzen, die sich in beiden Fällen nur geringfügig unterscheidet.

Bevorzugt sind der erste Ansatz und der zweite Ansatz so unabhängig wie möglich ausgestaltet. Dies hat den Vorteil die Korrelation der jeweiligen Fehler zu minimieren. Die Unabhängigkeit kann dadurch erreicht werden, dass für die Ansätze unterschiedliche Messwerte oder Merkmale verwendet werden. Alternativ können verschiedene Technologien eingesetzt werden. Beispielsweise kann der erste Ansatz als Convolutional Neural Network implementiert werden, während der zweite Ansatz als Clustering-Verfahren implementiert wird.

Cluster-Algorithmen funktionieren typischerweise am besten in Merkmalsräumen, die nicht zu hochdimensional sind. Aus diesem Grund kann es von Vorteil sein den ersten Ansatz als tiefes neuronales Netz auszugestalten und für die Bilderkennung die ersten Schichten vortrainierter Netze zu verwenden, die auf einer Vielzahl von Bildern aus einer Vielzahl von Domänen trainiert wurden - im Sinne von Foundation-Modellen. Die eigentliche Objekterkennung kann mit den Merkmalen trainiert werden, die von einem hidden layer bereitgestellt werden. Der zweite Ansatz kann mit semi-überwachtem Clustering auf demselben Merkmalsraum trainiert werden.

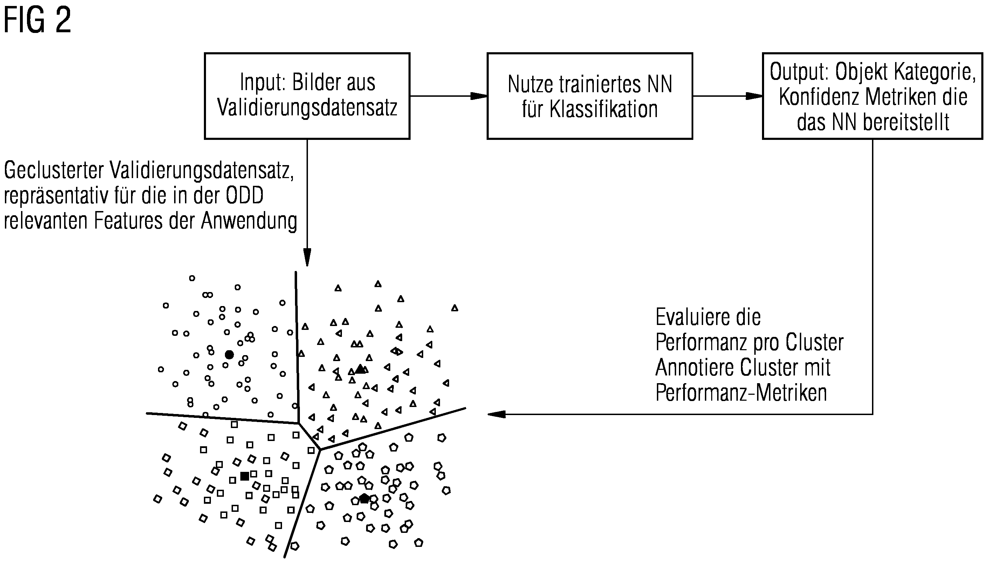

FIG 2 zeigt eine schematische Darstellung des zweiten Ansatzes gemäß einer Ausführungsform der Erfindung.

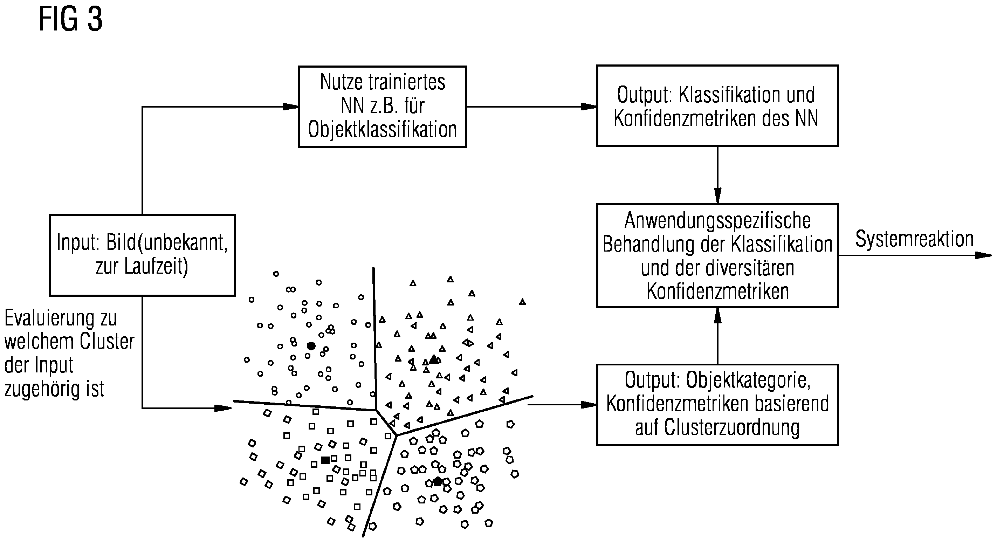

FIG 3 zeigt eine schematische Darstellung der Anwendung des zweiten Ansatzes für die Bestimmung der Plausibilitäts-Kennzeichen gemäß einer Ausführungsform der Erfindung.

## Patentansprüche

1. Computer-implementiertes Verfahren zum Überprüfen von Datenelementen hinsichtlich einer Plausibilität, aufweisend die Schritte
a. Bereitstellen eines ersten Eingabedatensatzes umfassend eine Mehrzahl von Datenelementen (S1);
b. Bereitstellen eines zweiten Eingabedatensatzes umfassend eine Mehrzahl von Datenelementen (S2); wobei
sich die Eingabedatensätze voneinander unterscheiden oder übereinstimmen;
c. Ermitteln von einem zugehörigen Betriebszustand für jedes Datenelement der Mehrzahl der Datenelemente mittels eines ersten Ansatzes basierend auf Maschinellem Lernen auf Basis des ersten Eingabedatensatzes oder des zweiten Eingabedatensatzes (S3); wobei
sich der Betriebszustand auf ein technisches System bezieht;
d. Ermitteln von einem zugehörigen Betriebszustand für jedes Datenelement der Mehrzahl der Datenelemente mittels mindestens eines zweiten Ansatzes basierend auf Maschinellem Lernen auf Basis des ersten Eingabedatensatzes oder des zweiten Eingabedatensatzes (S4);
e. Zuweisen von einem Plausibilitäts-Kennzeichen zu jedem Datenelement, welches mittels des ersten Ansatzes klassifiziert wird und Zuweisen von einem Plausibilitäts-Kennzeichen zu jedem Datenelement, welches mittels des zweiten Ansatzes klassifiziert wird (S5); und
f. Bereitstellen der mittels des ersten Ansatzes ersten klassifizierten Datenelemente mit den jeweiligen zugehörigen Plausibilitäts-Kennzeichen und Bereitstellen der mittels des zweiten Ansatzes zweiten klassifizierten Datenelemente mit den jeweiligen zugehörigen Plausibilitäts-Kennzeichen (S6).

2. Computer-implementiertes Verfahren nach Anspruch 1, wobei das Maschinelle Lernen überwachtes oder semi-überwachtes Lernen ist.

3. Computer-implementiertes Verfahren nach Anspruch 1, wobei der erste Ansatz basierend auf Maschinellem Lernen und/oder der zweite Ansatz basierend auf Maschinellem Lernen ein Ansatz ist, ausgewählt aus der Gruppe bestehend aus:
hierarchischen Clustering und relationales Lernen.

4. Computer-implementiertes Verfahren nach einem der vorhergehenden Ansprüche, wobei sich der erste Ansatz vom zweiten Ansatz unterscheidet.

5. Computer-implementiertes Verfahren nach einem der vorhergehenden Ansprüche, weiterhin aufweisend
- Ausgeben der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen auf einer Anzeigeeinheit,
- Speichern der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen in einer Speichereinheit, und
- Übermitteln der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen an eine Recheneinheit.

6. Computer-implementiertes Verfahren nach einem der vorhergehenden Ansprüche, weiterhin aufweisend
- Beurteilen des Systemverhaltens des technischen Systems, des ersten Ansatzes und/oder des zweiten Ansatzes unter Berücksichtigung der ersten klassifizierten Datenelemente mit den jeweiligen zugehörigen Plausibilitäts-Kennzeichen und/oder der zweiten klassifizierten Datenelemente mit den jeweiligen zugehörigen Plausibilitäts-Kennzeichen.

7. Technisches System zum Durchführen des Verfahrens nach einem der vorhergehenden Ansprüche.

8. Computerprogrammprodukt mit einem Computerprogramm, das Mittel zur Durchführung des Verfahrens nach einem der Ansprüche 1 bis 6 aufweist, wenn das Computerprogramm auf einer programmgesteuerten Einrichtung zur Ausführung gebracht wird.
